# EUROPEAN PATENT APPLICATION

(11) **EP 4 651 289 A1**
(43) Date of publication of application: **19.11.2025**
(21) Application number: 24882642.2
(22) Date of filing: 11.09.2024
(51) Int. Cl.: H01M 50/375, H01M 50/30, H01M 50/383, H01M 50/502, H01M 10/658, H01M 50/271, H01M 50/211

(54) **BATTERY MODULE AND BATTERY PACK COMPRISING SAME**

(30) Priority: 23.10.2023 KR 20230142114
(71) Applicant: LG Energy Solution, Ltd., Seoul 07335 (KR)
(72) Inventor: LEE, So Jeong, Daejeon 34122 (KR); NA, Jongseung, Daejeon 34122 (KR)
(74) Representative: Plasseraud IP
(86) International application number: PCT/KR2024/013762
(87) International publication number: WO 2025/089613

(57) **Abstract**

A battery module according to an embodiment of the present disclosure includes a battery cell stack in which a plurality of battery cells are stacked; a module frame that houses the battery cell stack; and a phase change material layer that is located between the battery cell stack and the module frame, wherein the phase change material layer includes a phase change material and has a mesh structure, and wherein the module frame is formed with venting holes.

## Description

### [TECHNICAL FIELD]

### Cross-Reference to Related Application(s)

This application claims priority to and the benefit of Korean Patent Application No. 10-2023-0142114, filed on October 23, 2023, with the Korean Intellectual Property Office, the disclosure of which is incorporated herein by reference in its entirety.

The present disclosure relates to a battery module and a battery pack including the same, and more particularly, to a battery module that can guide venting in a desired direction and a battery pack including the same.

### [BACKGROUND]

The use of mobile devices such as cell phones, laptops, camcorders, and digital cameras has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles (EV), hybrid electric vehicles (HEV), plug-in hybrid electric vehicles (P-HEV) and so on. Thus, the necessity to develop the secondary batteries is increasing.

Presently, commercially available batteries include nickel-cadmium batteries, nickel-hydrogen batteries, nickel-zinc batteries, and lithium batteries. Of these batteries, lithium batteries are emerging as the most popular, as they do not suffer from the memory effect, and therefore, are freely rechargeable, have low self-discharge rates, and have high energy density, as compared to nickel-based batteries.

Such a lithium secondary battery mainly uses a lithium-based oxide and a carbonaceous material as a positive electrode active material and a negative electrode active material, respectively. The lithium secondary battery includes an electrode assembly fabricated by disposing a separator between a positive electrode plate and a negative electrode plate, which are coated with the positive electrode active material and the negative electrode active material, respectively, and a battery case that hermetically houses the electrode assembly together with an electrolyte.

Generally, according to the exterior shapes of battery cases, lithium secondary batteries may be classified into can-shaped secondary batteries fabricated by mounting the electrode assembly in a metal can, and pouch-shaped secondary batteries fabricated by mounting the electrode assembly in a pouch made of an aluminum laminate sheet.

In case of secondary batteries used for small-size devices, two to three battery cells are disposed, and in case of secondary batteries used for medium- and large-size devices such as automobiles, a battery module is used, which includes a plurality of battery cells electrically connected to each other. In the battery module, the plurality of battery cells are connected in series or parallel to form a battery cell stack, which improves the capacity and the power. One or more battery modules may configure a battery pack by being mounted together with various control and protection systems such as a battery disconnect unit (BDU), a battery management system (BMS), and a cooling system.

In the battery pack configured to gather a plurality of battery modules, heat generated from the plurality of battery cells can be added up in a narrow space, so that the temperature can rise more quickly and excessively. In other words, battery modules in which a plurality of battery cells are stacked and a battery pack equipped with these battery modules can obtain high output, but it is not easy to remove heat generated from the battery cells during charging and discharging. When the heat dissipation of the battery cell is not properly performed, deterioration of the battery cells is accelerated, the lifetime is shortened, and the possibility of explosion or ignition increases.

Since multiple battery modules are concentratedly disposed to increase the mileage of the vehicle, a thermal runaway phenomenon generated in any of the battery modules can easily propagate to an adjacent battery module, which may eventually lead to ignition or explosion of the battery pack itself. In order to prevent and delay thermal runaway, heat insulating material can be disposed between battery cells. However, if a thermal runaway phenomenon occurs in any of the battery cells in a confined space, a thermal runaway phenomenon may occur simultaneously in the battery cell stack containing the battery cell.

In addition, when the physical, thermal, and electrical damage to the battery cell including overcharging occurs, the internal pressure of the battery cell increases, and when the fusion strength limit value of the battery cell is exceeded, high-temperature gas and flame generated in the battery cell may be ejected to the outside of the battery module, which may affect adjacent battery modules or other electrical components. This leads to thermal propagation between adjacent battery modules, which can cause a chain ignition within the battery pack.

Therefore, in order to prevent thermal propagation, there is a need to develop a venting technology that can guide high-temperature gas in a specific direction in a battery module unit and a technology that can delay thermal runaway between battery cells.

### [DETAILED DESCRIPTION OF THE INVENTION]

### [Technical Problem]

It is an object of the present disclosure to provide a battery module that can guide high-temperature gas and flame generated within the battery module in a specific direction, and at the same time, can delay or prevent a thermal runaway phenomenon, and a battery pack including the same.

However, the technical objects solved by the embodiments of the present disclosure are not limited to those disclosed above, and may be expanded in various ways within the scope of the technical idea included in the present disclosure.

### [Technical Solution]

According to an embodiment of the present disclosure, there is provided a battery module comprising: a battery cell stack in which a plurality of battery cells are stacked; a module frame that houses the battery cell stack; and a phase change material layer that is located between the battery cell stack and the module frame, wherein the phase change material layer includes a phase change material and has a mesh structure, and wherein the module frame is formed with venting holes.

The phase change material layer may be located between an upper surface of the battery cell stack and a ceiling part of the module frame.

The phase change material layer may include an open part which is an opened area in the mesh structure, and a block part which is a blocked area in the mesh structure.

At least one of the venting holes may be located corresponding to the open part of the phase change material layer.

The phase change material layer may include a paraffin material.

The phase change material layer may have a mesh structure having a hive shape, a square shape or a rhombus shape.

The battery module may further comprise a busbar frame that covers the upper surface of the battery cell stack and one surface in the direction in which the electrode leads of the battery cell protrude. Gas guide holes may be formed in a portion of the busbar frame facing the module frame part in which the venting hole is formed.

The battery cell may include an electrode assembly and a battery case that houses the electrode assembly. A heat insulating coating may be formed on the surface of the battery case, or a heat insulating material may be included in the battery case.

A heat insulating case wraps around at least a part of the outer surface of the battery cell, and the heat insulating case may be formed with a venting part.

The venting part may be located corresponding to at least one of the venting holes of the module frame.

According to another embodiment of the present disclosure, there is provided a battery pack comprising: the battery module; a pack frame in which the battery module is housed; and a pack cover that covers the battery module housed in the pack frame. A pack cover venting hole is formed in a portion of the pack cover that corresponds to the venting hole.

The battery pack may further comprise a venting film that covers the upper part of the pack cover.

### [Advantageous Effects]

According to embodiments of the present disclosure, a phase change material layer having a mesh structure is disposed between the battery cells and the module frame, and the module frame is formed with venting holes through which high-temperature gas or flame is discharged, thereby guiding the high-temperature gas or flame in a specific direction and minimizing thermal propagation between the battery modules.

In addition, at the time of reaching the thermal runaway temperature, the phase change material layer melts down, thereby delaying or preventing thermal runaway and ignition of the battery cells.

The effects of the present disclosure are not limited to the effects mentioned above and additional other effects not described above will be clearly understood from the description of the appended claims by those skilled in the art.

### [BRIEF DESCRIPTION OF THE DRAWING]

FIG. 1 is a perspective view showing a battery module according to an embodiment of the present disclosure.
FIG. 2 is an exploded perspective view of the battery module of FIG. 1.
FIG. 3 is a plan view showing one of the battery cells included in the battery module of FIG. 2.
FIG. 4 is an exploded perspective view showing a battery module according to another embodiment of the present disclosure.
FIGS. 5 to 7 are partial views showing phase change material layers according to some embodiments of the present disclosure, respectively.
FIG. 8 is a perspective view showing a battery cell stack according to another embodiment of the present disclosure.
FIG. 9 is an exploded perspective view showing a battery cell and a heat insulating case included in the battery cell stack of FIG. 8.
FIG. 10 is a perspective view showing the heat insulating case of FIG. 9.
FIGS. 11 (a) and (b) are cross-sectional views taken along the cutting line C-C' of FIG. 10, each of which shows the embodiments of the present disclosure.
FIG. 12 is a perspective view showing a heat insulating case according to another embodiment of the present disclosure.
FIG. 13 is a partial perspective view showing a battery pack according to an embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Further, throughout the specification, when a portion is referred to as "including" a certain component, it means that the portion can further include other components, without excluding the other components, unless otherwise stated.

Throughout the descriptions herein, when a certain part "includes" a component, this does not indicate that the certain part excludes other components, but indicates that the part may further include other components, unless otherwise defined.

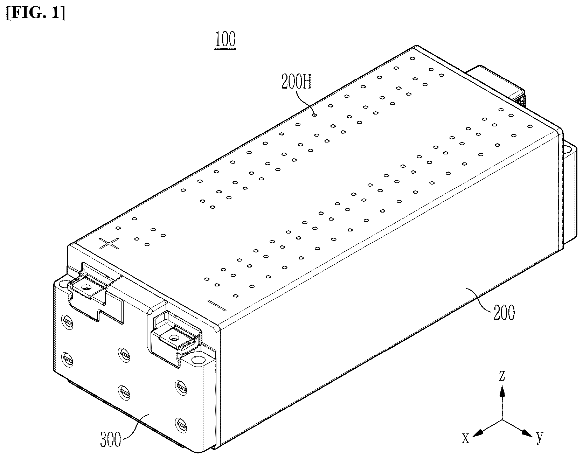

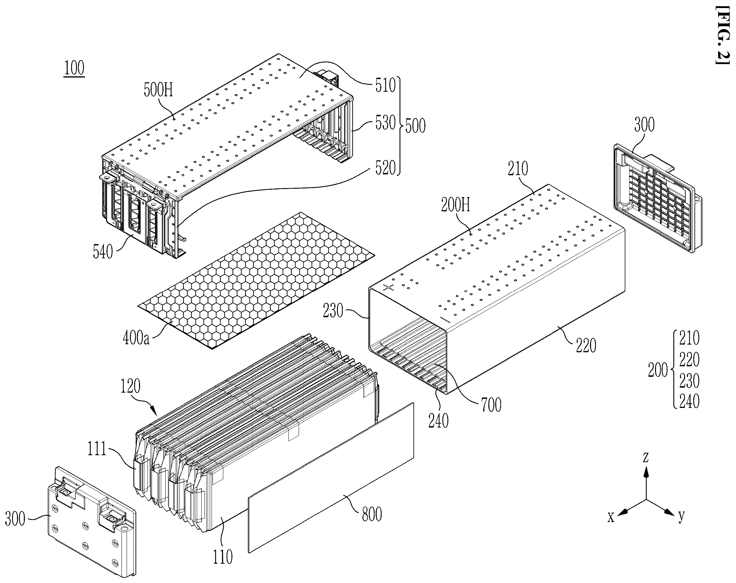

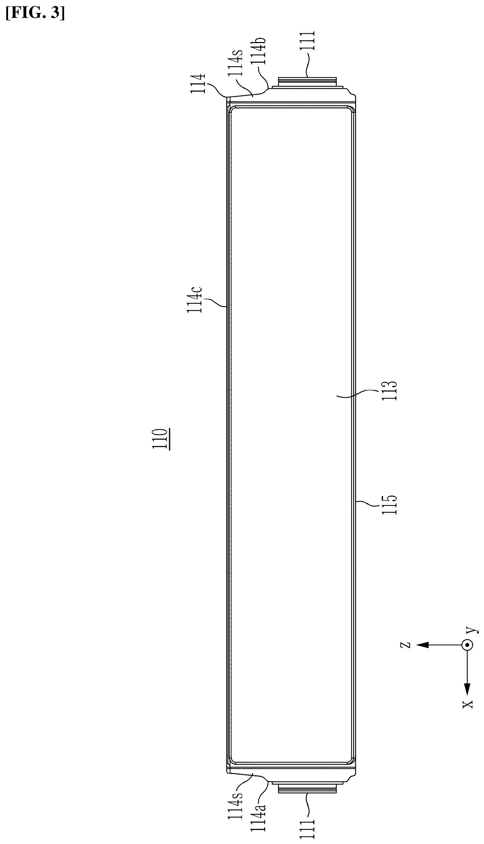

FIG. 1 is a perspective view showing a battery module according to an embodiment of the present disclosure. FIG. 2 is an exploded perspective view of the battery module of FIG. 1. FIG. 3 is a plan view showing one of the battery cells included in the battery module of FIG. 2.

Referring to FIGS. 1 to 3, a battery module 100 according to an embodiment of the present disclosure includes a battery cell stack 120 in which a plurality of battery cells 110 are stacked; a module frame 200 that houses the battery cell stack 120; and a phase change material layer 400a located between the battery cell stack 120 and the module frame 200.

The battery cell 110 according to the present embodiment may be various types of battery cells, for example, a pouch-type battery cell, a prismatic battery cell, or a cylindrical battery cell. As an example, as shown in FIGS. 2 and 3, the battery cell 110 according to the present embodiment may be a pouch-type battery cell. Below, a pouch-type battery cell will be described, but the battery cell 110 according to the present embodiment is not limited thereto, and various types of battery cells may be applied.

The battery cell 110 according to the present embodiment may have a structure in which an electrode assembly having electrode leads 111 protruding in one or both directions is housed in a pouch-type battery case 114. Such battery cells 110 may have a rectangular sheet shape. The battery cell 110 may be formed by housing an electrode assembly in a battery case 114 made of a laminate sheet including a resin layer and a metal layer, and then adhering the outer peripheral part of the battery case 114. As an example, the battery cell 110 may have a structure in which two electrode leads 111 are opposite to each other and protrude from one end 114a and the other end 114b of the cell main body 113. As another example, a structure in which all the electrode leads 111 of the battery cells 110 protrude in one direction is also possible. One of the electrode leads 111 is a positive electrode lead, and the other is a negative electrode lead.

The battery cell 110 can be produced by adhering both end parts 114a and 114b of a battery case 114 and one side part 114c connecting them in a state in which an electrode assembly (not shown) is housed in a battery case 114. In other words, the battery cell 110 according to an embodiment of the present disclosure has a total of three sealing parts 114s, wherein the sealing parts 114s have a structure that is sealed by a method such as fusion, and the remaining other one side part may be composed of a folding part 115. That is, the battery cell 110 according to the present embodiment may be a pouch-type secondary battery in which the electrode assembly is housed inside the battery case 114 and the outer peripheral part of the battery case 114 is sealed to form a sealing part 114s. In FIG. 3, only a state in which the sealing parts 114s are formed at both end parts 114a and 114b of the battery case 114 are shown, and the sealing part is not shown on the side facing the folding part 115, however, the sealing part on the side facing the folding part 115 may be in a state being folded to one side after sealing is completed for space utilization.

The battery case 114 of the laminate sheet may include an inner resin layer for sealing, a metal layer for preventing penetration of materials, and an outer resin layer located on the outermost side. Based on the electrode assembly inside the battery case 114, the inner resin layer may be located on the innermost side, the outer resin layer may be located on the outermost side, and the metal layer may be located between the inner resin layer and the outer resin layer.

The outer resin layer has excellent tensile strength and weather resistance relative to the thickness and can have electrical insulation properties in order to protect the electrode assembly from the outside. Such an outer resin layer may include a polyethylene terephthalate(PET) resin or a nylon resin. The metal layer can prevent air, moisture, and the like from flowing into the pouch-type secondary battery. This metal layer may include aluminum(Al). The inner resin layers may be heat-sealed to each other by heat and/or pressure applied in a state in which the electrode assembly is embedded. This inner resin layer may include casted polypropylene(CPP) or polypropylene(PP).

The battery case 114 is divided into two portions, and a concave-shaped housing part in which the electrode assembly can be seated may be formed in at least one of the two portions. Along the outer circumference of this housing part, the inner resin layers of the two portions of the battery case 114 may be joined to each other to provide a sealing part 114s. The battery case is sealed in this manner, so that the battery cell 110, which is a pouch-type secondary battery, can be produced.

The plurality of battery cells 110 may be stacked so as to be electrically connected to each other. In particular, the plurality of battery cells 110 may be stacked along one direction while standing upright so that one surface of the cell main body 113 faces the other. As an example, the battery cells 110 may be stacked along a direction parallel to the y-axis. Thereby, the electrode leads 111 may protrude in a direction perpendicular to the direction in which the battery cells 110 are stacked. In the battery cell 110, one electrode lead 111 may protrude toward the x-axis direction, and the other electrode lead 111 may protrude toward the -x-axis direction. If the battery leads 111 are battery cells that protrude only in one direction, the electrode leads 111 may protrude in the x-axis direction or the -x-axis direction.

The battery cell stack 120 is housed in the module frame 200. The module frame 200 may be a metal frame having a structure in which both surfaces are opened. More specifically, based on the battery cell stack 120, both surfaces of the module frame 200 may be opened in both directions in which the electrode leads 111 protrude. However, the module frame 200 shown in FIG. 2 is an exemplary structure, and the shape thereof is not particularly limited as long as it can house the battery cell stack 120. The module frame 200 of FIG. 2 may include a ceiling part 210, both side wall parts 220 and 230, and a bottom part 240, and the ceiling part 210, the both side wall parts 220 and 230, and the bottom part 240 may cover the upper surface, both side surfaces, and the lower surface of the battery cell stack 120, respectively. The module frame 200 may be a mono frame in which the ceiling part 210, the both side wall parts 220 and 230, and the bottom part 240 are integrated.

The module frame 200 according to the present embodiment is formed with venting holes 200H. Specifically, the module frame 200 may have formed with a plurality of venting holes 200H in the ceiling part 210. The plurality of venting holes 200H may be disposed so as to form a plurality of rows along the longitudinal direction of the battery cell stack 120, i.e., the x-axis direction in FIGS. 1 and 2. At this time, at least one of the plurality of rows may be disposed adjacent to one edge of the ceiling part 210 of the module frame 200.

Such venting holes 200H are formed in the module frame 200, whereby when a thermal runaway phenomenon occurs inside the battery module 100, i.e., in the battery cell stack 120, the flow of gas or flame generated together may be guided upward, thereby preventing a thermal propagation phenomenon in which the ignition propagates to another battery module 100 adjacent to the battery module 100 where ignition occurred. Further, it is possible to visually measure the flow of gas guided to the upper part of the module frame 200, thereby provide a solution capable of guiding ignition delay within the module. In particular, the venting holes 200H are disposed so as to form a row along the longitudinal direction of the battery cell stack 120, thereby making it possible to guide gas generated from the battery cells 110 over the entire area in the longitudinal direction.

Such venting holes 200H can be formed by applying a punching process to the ceiling part 210 of the module frame 200, wherein the punching method is not particularly limited, and methods such as drilling, punching, and pressing can be applied.

The battery module 100 according to the present embodiment can include a busbar frame 500 that covers an upper surface of the battery cell stack 120 and one surface or both surfaces in the direction in which the electrode leads 111 of the battery cell 110 protrude.

As an example, the busbar frame 500 may include an upper frame 510, a front frame 520, and a rear frame 530. The front frame 520 and the rear frame 530 are respectively located on one surface and the other surface of the battery cell stack 120, and thus can cover the battery cell stack 120 and at the same time, guide the connection with the battery cell stack 120 and an external device. Specifically, the front frame 520 and the rear frame 530 may be mounted with a terminal busbar, a module connector, and the like including a busbar 540. In particular, the front frame 520 and the rear frame 530 may be respectively mounted with a busbar 540 and the like on the surface opposite to the surface facing the battery cell stack 120.

The electrode lead 111 of the battery cell 110 may pass through a slit formed in the front frame 520 and then be bent to join to a busbar 540 mounted on the front frame 520. Meanwhile, the other electrode lead 111 of the battery cell 110 may pass through a slit formed in the rear frame 530 and then be bent to join to a busbar 540 mounted on the rear frame 530.

The busbar 540 is for electrically connecting the battery cells 110, includes a metal material, and can be joined to the electrode lead 111 of the battery cell 110 by a method such as welding. The battery cells 110 constituting the battery cell stack 120 may be connected by this busbar 540 in series or parallel. In addition, the battery cells 110 can be electrically connected to external devices or circuits through terminal busbars exposed to the outside of the battery module 100.

The front frame 520 and the rear frame 530 can include electrically insulating materials. The front frame 520 and the rear frame 530 can exclude a portion where the busbars 540 are joined to the electrode leads 111, and limit the busbars 540 from being in contact with the battery cells 110, thereby preventing the occurrence of a short circuit.

The upper frame 510 may be connected to each of the front frame 520 and the rear frame 530, and may cover the upper surface of the battery cell stack 120. When the module frame 200 is a mono frame in which the ceiling part 210, both side wall parts 220 and 230, and the bottom part 240 are integrated, the battery cell stack 120 and the busbar frame 500 may be inserted into one of the both open surfaces of the module frame 200. In order to prevent the upper surface of the battery cell stack 120 from being damaged by the module frame 200 in the process of inserting the battery cell stack 120 in this way, the busbar frame 500 may be provided with an upper frame 510 that covers the upper surface of the battery cell stack 120.

In the busbar frame 500 according to the present embodiment, a portion facing a module frame 200 portion having venting holes 200H formed therein may be formed with gas guide holes 500H. Specifically, the gas guide holes 500H may be formed in the upper frame 510 of the busbar frame 500 so as to face a plurality of venting holes 200H formed in the ceiling part 210 of the module frame 200. The gas guide holes 500H of the busbar frame 500 may, together with the venting holes 200H of the module frame 200, may guide gas or flame generated in the battery cell stack 120 to the upper side of the battery module. Thereby, it is possible to prevent a thermal propagation phenomenon in which ignition propagates to another adjacent battery module 100.

Meanwhile, the battery module 100 according to the present embodiment may include end plates 300 that cover the both open surfaces of the module frame 200, respectively. One of the end plates 300 may be joined to the module frame 200 while covering the front frame 520, and another of the end plates 300 may be joined to the module frame 200 while covering the rear frame 530. The front frame 520 may be located between one of the end plates 300 and the battery cell stack 120, and the rear frame 530 may be located between another of the end plates 300 and the battery cell stack 120.

The end plates 300 may be located so as to cover both surfaces of the battery cell stack 120 in the direction in which the electrode leads 111 protrude. The end plates 300 may protect the battery cell stack 120 and various electrical components from external impact, and for this purpose, need to have a predetermined strength and may include a metal such as aluminum. Further, each of the end plates 300 may be joined to a corresponding corner of the module frame 200 by a method such as welding. In addition, although not specifically shown in the figure, a heat insulating cover (not shown) for electrical insulation may be located between one end plate 300 and the front frame 520 and between the other end plate 300 and the rear frame 530, respectively.

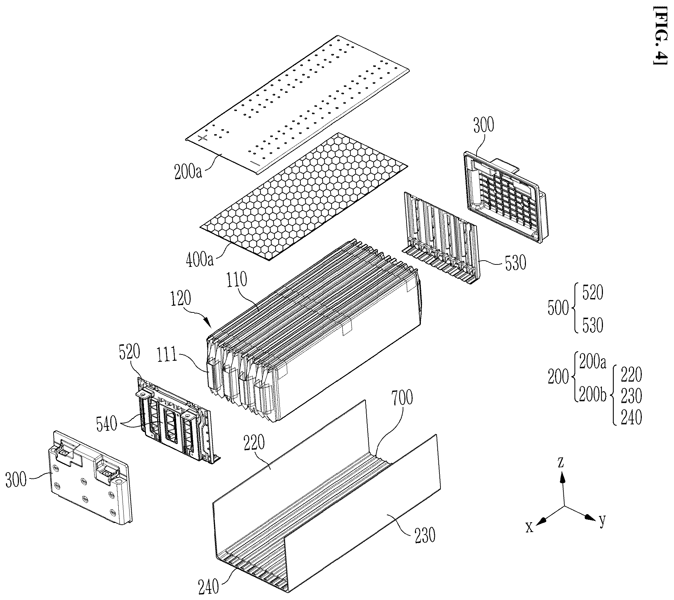

FIG. 4 is an exploded perspective view showing a battery module according to another embodiment of the present disclosure.

Referring to FIG. 4, a battery module 100 according to another embodiment of the present disclosure may include a battery cell stack 120, a module frame 200, an end plate 300, and a busbar frame 500. At this time, since the battery cell stack 120 and the end plate 300 have the same configuration as previously described in FIGS. 1 and 2, description thereof will be omitted.

The module frame 200 according to the present embodiment may include an upper cover 200a and a U-shaped frame 200b. The battery cell stack 120 may be housed in an internal space formed by the upper cover 200a and the U-shaped frame 200b. The upper cover 200a may cover the upper surface of the battery cell stack 120. The U-shaped frame 200b may include both side wall parts 220 and 230 and a bottom part 240, the both side wall parts 220 and 230 of the U-shaped frame 200b may cover both side surfaces of the battery cell stack 120, and the bottom part 240 of the U-shaped frame 200b may cover the lower surface of the battery cell stack 120.

The module frame 200 can be completed while the two side wall parts 220 and 230 of the U-shaped frame 200b and the upper cover 200a are welded together. That is, the U-shaped frame 200b and the upper cover 200a after joining can correspond to the ceiling part of the module frame 200. The venting hole 200H according to the present embodiment can be formed in the ceiling part of the module frame 200, i.e., the upper cover 200a. The details of the venting hole 200H overlap with the contents previously described, and therefore will be omitted.

The busbar frame 500 according to the present embodiment may include a front frame 520 and a rear frame 530. The front frame 520 and the rear frame 530 may be mounted with the above-mentioned busbar 540, and the like. However, unlike the busbar frame in FIGS. 1 and 2 described above, the busbar frame 500 in the present embodiment may not include an upper frame. The battery cell stack 120 and the busbar frame 500 may be inserted through the open upper part of the U-shaped frame 200b, and then the U-shaped frame 200b and the upper cover 200a may be joined to each other. That is, since there is no risk of damage to the upper surface of the battery cell stack 120 in the process of housing the battery cell stack 120 inside the module frame 200, the upper frame can be excluded from the busbar frame 500, and the battery module 100 according to the present embodiment can reduce the weight and height space accordingly.

Next, the phase change material layer 400a according to the present invention will be described in detail.

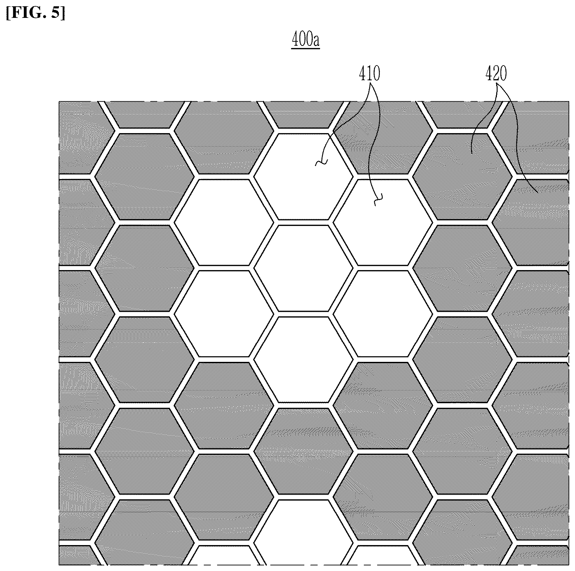

FIGS. 5 to 7 are partial views showing phase change material layers according to some embodiments of the present disclosure, respectively.

First, referring to FIGS. 2, 4 and 5, the phase change material layer 400a according to the present embodiment is located between the battery cell stack 120 and the module frame 200 as described above, includes a phase change material (PCM), and has a mesh structure. In particular, the phase change material layer 400a may be located between the upper surface of the battery cell stack 120 and the ceiling part of the module frame 200. In the battery module 100 of FIG. 2, the phase change material layer 400a may be located between the upper surface of the battery cell stack 120 and the upper frame 510 of the busbar frame 500. In the battery module 100 of FIG. 4, since the busbar frame 500 does not have an upper frame, the phase change material layer 400a may be located between the upper surface of the battery cell stack 120 and the ceiling part of the module frame 200, i.e., the upper cover 200a.

The phase change material layer 400a according to the present embodiment has a mesh structure, and therefore, when a thermal runaway phenomenon occurs in the battery cell stack 120, the flow of gas or flame guided to the upper side can be guided without obstruction. That is, the gas or flame generated in the battery cell stack 120 can pass through the phase change material layer 400a having a mesh structure, and then be discharged to the outside through the venting hole 200H of the module frame 200. In the battery module 100 of FIG. 2, gas or flame can pass through the mesh-structured phase change material layer 400a, the gas guide hole 500H of the busbar frame 500, and the venting hole 200H of the module frame 200 in sequence and be discharged to the outside.

Further, the phase change material layer 400a includes a phase change material (PCM). In particular, the phase change material layer 400a according to the present embodiment may be a layer in which the phase change material is formed of a mesh-structured sheet. The phase change material layer 400a including the phase change material(PCM) can melt down at the time of reaching the thermal runaway temperature in the thermal runaway state of the battery cell stack 120, thereby delaying or preventing thermal runaway and ignition of the battery cells 110. The phase change material layer 400a can perform a kind of fire extinguishing function for the battery cells 110. That is, the phase change material layer 400a according to the present embodiment can guide gas or flame generated during the thermal runaway phenomenon of the battery cell stack 120 to be discharged through the venting hole 200H of the module frame 200, and at the same time, can function as a fire extinguishing member that directly extinguishes the thermal runaway and ignition of the battery cells 110. This phase change material layer 400a can include a paraffin material as the phase change material.

In addition, when the phase change material layer 400a has a mesh structure, the phase change material layer 400a can be formed to a thin thickness, so that the phase change material layer 400a can be easily inserted into a narrow gap between the battery cell stack 120 and the ceiling part 210 of the module frame 200, or a narrow gap between the battery cell stack 120 and the upper frame 510 of the busbar frame 500. Further, in a case where the phase change material layer 400a has a mesh structure, when the battery module 100 or the battery pack structure including the same collapses due to gas or pressure inside the battery module 100, the mesh structure of the phase change material layer 400a can be expected to have the effect of supporting a part thereof and slowing down the collapse speed.

The phase change material layer 400a according to the present embodiment may include an open part 410 which is an opened area in the mesh structure, and a block part 420 which is a blocked area in the mesh structure. When manufacturing a mesh structure with a phase change material such as a paraffin material, some areas in the mesh structure may be filled with the phase change material to form a block part 420 which is a blocked area. A portion that is left open without being filled with the phase change material may become an open part 410. In the phase change material layer 400a having a mesh structure, some areas are provided as open parts 410, and some areas are provided as block parts 420, so that gas discharge in a desired direction, i.e. directional venting, can be performed more effectively. That is, in the phase change material layer 400a, the designer can form a block part 420 and an open part 410 in a desired area at a desired portion, whereby the gas discharge area and the degree of gas discharge in the gas discharge area can be easily set.

For example, at least one of the venting holes 200H of the module frame 200 can be located corresponding to the open part 410 of the phase change material layer 400a. At least one of the venting holes 200H being located corresponding to the open part 410 means that, when the battery module 100 is viewed from above, at least one of the venting holes 200H and the open part 410 are located so as to have a portion that overlaps with each other. Further, viewing the battery module 100 from above means viewing it along a direction perpendicular to the ground. In other words, viewing the battery module 100 from above means viewing the battery module 100 along the -z axis direction on the xy plane in FIG. 1, 2 or 4.

Since the venting hole 200H and the open part 410 are located so as to overlap each other, directional venting that guides flame or gas generated during thermal runaway of the battery cell stack 120 to the venting hole 200H can be performed more effectively. That is, the open part 410 of the phase change material layer 400a provided to correspond to the venting hole 200H can guide gas or flame to the venting hole 200H and guide it to be discharged through the venting hole 200H.

Further, as described above, the phase change material layer 400a can function as a fire extinguishing member that melts down at the time of reaching a thermal runaway temperature and directly extinguishes the thermal runaway and ignition of the battery cells 110. However, in order to effectively exhibit the fire extinguishing function, the phase change material must be provided in a predetermined volume. In other words, if the phase change material is provided only in a mesh structure, the amount of the phase change material itself may be deficient, and the fire extinguishing function may not be properly performed. When the block part 420 is formed, the phase change material can be provided in a predetermined volume in the phase change material layer 400a, so that the fire extinguishing function can be excellently exhibited.

Taken together, as an open part 410 and a block part 420 are formed in the phase change material layer 400a according to the present embodiment, whereby gas discharge in the desired direction, i.e. directional venting, is effectively performed, and at the same time, direct fire extinguishing is made possible against thermal runaway and fire of the battery cells 110.

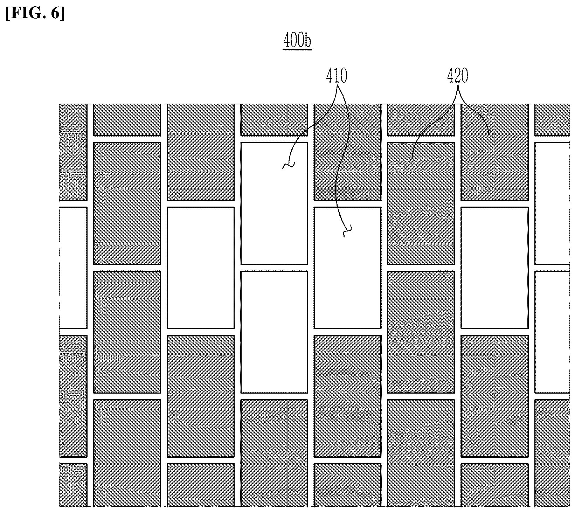

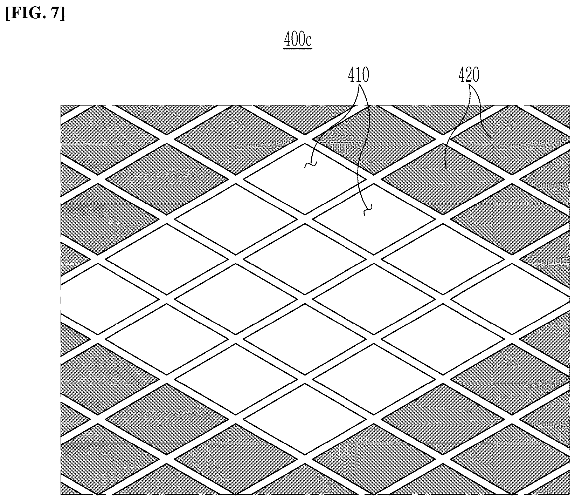

Referring to FIGS. 5 to 7, the phase change material layers 400a, 400b and 400c according to the embodiments of the present disclosure may have mesh structure having a hive shape, a square shape or a rhombus shape. A phase change material layer 400a having a hive-shaped mesh structure is shown in FIGS. 2, 4, and 5. A phase change material layer 400b having a square-shaped mesh structure is shown in FIG. 6, and a phase change material layer 400c having a rhombus-shaped mesh structure is shown in FIG. 7. Further, respective phase change material layers 400a, 400b and 400c may have an open part 410 and a block part 420 as described above. That is, if the phase change material layers 400a, 400b and 400c according to the present embodiment has a mesh structure, the specific form of the mesh structure is not particularly limited. However, in order to ensure that the phase change material layer having the mesh structure exhibits a support function for the battery module, a structurally stable hive-shaped mesh structure may be most preferable.

Meanwhile, referring again to FIG. 3, the battery cell 110 according to the present embodiment may include an electrode assembly (not shown) and a battery case 114 that houses the electrode assembly as described above. In this case, a heat insulating coating may be formed on the surface of the battery case 114, or a heat insulating material may be included in the battery case 114. A separate insulating material may be disposed between the battery cells 110 of the battery cell stack 120, but if a thermal runaway phenomenon occurs in the battery cells 110 in a confined space, the battery cell stack may simultaneously experience thermal runaway, which is not easily protected by a separate insulating material. Therefore, in the present embodiment, by performing a heat insulating coating treatment which comprises coating the surface of the battery case 114 of the battery cell 110 with a material including a heat insulating material, or by including a heat insulating material in the battery case 114 itself, most of the surface of the battery cell 110 can be protected from thermal runaway. The material applied as the insulation material is not particularly limited as long as it can exhibit the insulation function.

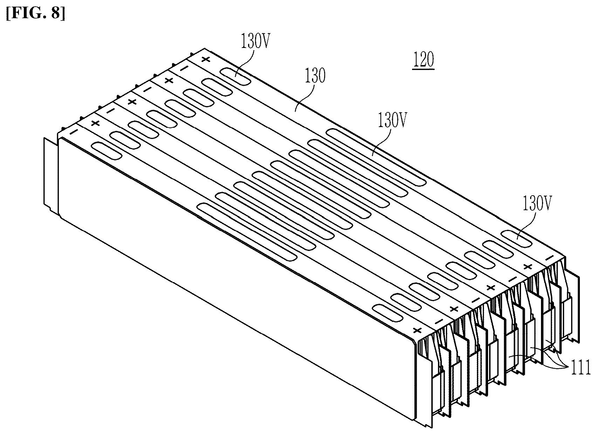

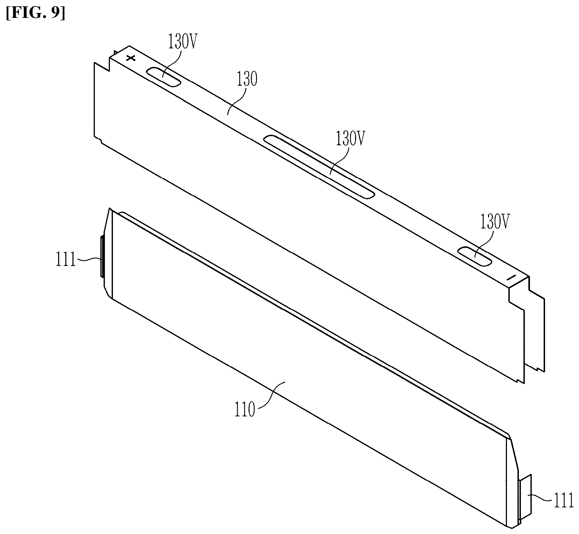

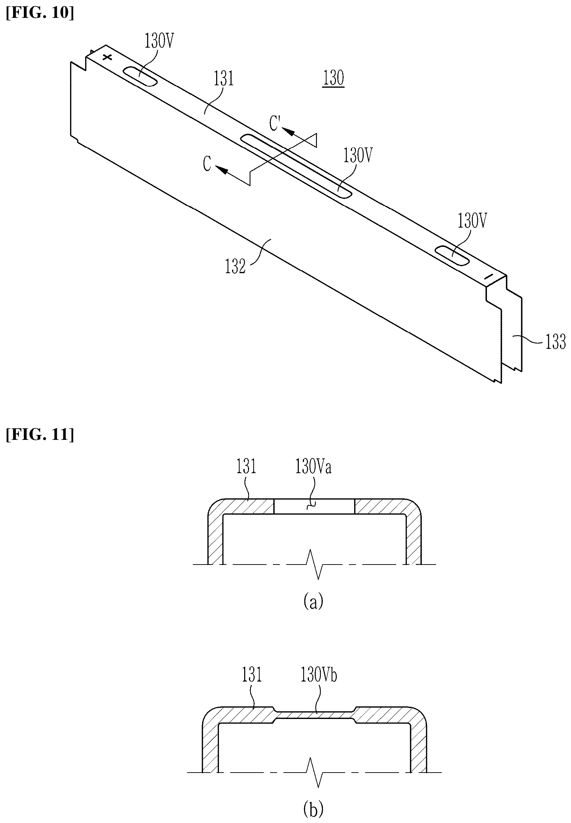

FIG. 8 is a perspective view showing a battery cell stack according to another embodiment of the present disclosure. FIG. 9 is an exploded perspective view showing a battery cell and a heat insulating case included in the battery cell stack of FIG. 8. FIG. 10 is a perspective view showing the heat insulating case of FIG. 9.

Referring to FIGS. 8 to 10, in a battery cell stack 120 according to another embodiment of the present disclosure, a heat insulating case 130 may wrap around the outer surface of each of the battery cells 110. The heat insulating case 130 may wrap around at least a part of the outer surface of the battery cell 110, and may include a heat insulating material.

The heat insulating case 130 may include an upper surface part 131 and side surface parts 132 and 133. The upper surface 131 may cover the upper part of the battery cell 110, and the side surface parts 132 and 133 may cover both side surfaces of the battery cell 110, respectively. One surface of the side surface parts 132 and 133 and one surface of the upper surface part 131 may be perpendicular, and the side surface parts 132 and 133 may extend downward from both opposing sides of the upper surface part 131, respectively. The heat insulating case 130 according to the present embodiment may have a structure opened on the lower side. That is, when the heat insulating case 130 is cut along one plane, the heat insulating case 130 may have an 'n' shape. The heat insulating case 130 according to the present embodiment may be arranged to wrap around at least a part of three of the remaining four surfaces of the six-sided battery cell 110, excluding two surfaces where the electrode leads 111 are formed.

The heat insulating case 130 may not only delay the thermal runaway phenomenon, but also supplement the rigidity of the battery cell 110, thereby allowing the battery cell 110 to maintain an upright state. The heat insulating case 130 can cover at least a part of the battery cells 110 to thereby support the battery cells 110, and can stably maintain the stacked state of the battery cells 110 arranged upright in one direction. More specifically, the side surface parts 132 and 133 of the heat insulating case 130 can support the side surfaces of the battery cell 110, so that the upright state of the battery cell 110 can be maintained.

FIGS. 11 (a) and (b) are cross-sectional views taken along the cutting line C-C' of FIG. 10, each of which shows the embodiments of the present disclosure.

Referring to FIGS. 9 to 11 together, the heat insulating case 130 may be formed with a venting part 130V. In particular, the venting part 130V may be formed on the upper surface 131 of the heat insulating case 130, and the number or area thereof are not particularly limited. The heat insulating case 130 has a box shape including a heat insulating material, and can prevent thermal runaway generated in the battery cell 110 inside from propagating to the adjacent battery cell 110. The material applied as the heat insulating material included in the heat insulating case 130 is not particularly limited as long as it can exhibit the heat insulating function.

When thermal runaway occurs in at least one battery cell 110 inside the heat insulating case 130 to thereby generate high-temperature gas and flame, the venting part 130V formed in the heat insulating case 130 functions as a passage for discharging the high-temperature gas and flame. If efficient discharge of gas and flame is possible, the number and area of the venting parts 130V provided in one heat insulating case 130 are not particularly limited. As an example, as shown in FIG. 8 or 9, three venting parts 130V may be formed on the upper surface 131 of the heat insulating case 130, and the area of the venting part 130V formed in the middle may be slightly larger than the area of the other venting parts 130V.

Conventionally, when ignition occurs in the battery cell 110, there is a problem that gas, spark, etc. moved toward the electrode lead 111 to thereby cause an additional thermal runaway phenomenon. However, in this embodiment, a venting part 130V is formed in the heat insulating case 130, so that the movement of gas and spark in the direction where the electrode lead 111 is located can be minimized. The gas discharge path by the venting part 130V can be separated from the electrode lead 111, and the electrode lead 111 and the electrical components connected thereto can be prevented from being damaged by gas, spark, flame, or the like.

Further, the venting part 130V can be located corresponding to at least one of the venting holes 200H of the module frame 200. The venting part 130V being located corresponding to the venting holes 200H of the module frame 200 means that when the battery module 100 is viewed from above, at least one of the venting holes 200H and the venting part 130V are located so as to have a portion where that they overlap each other.

The venting part 130V is provided in the heat insulating case 130, which may make it to guide high-temperature gas or flame generated from the battery cells 110 to be discharged through the venting part 130V and the venting hole 200H of the module frame 200. That is, high-temperature gas or flame generated in the battery cells 110 may pass through the venting part 130V, the mesh-structured phase change material layer 400a, and the venting hole 200H in sequence and be discharged to the outside.

Meanwhile, as shown in FIG. 11(a), the venting part 130Va according to an embodiment of the present disclosure may be in the form of a hole that penetrates a part of the upper surface portion 131 of the heat insulating case 130. Alternatively, as shown in FIG. 11(b), the venting part 130Vb according to another embodiment of the present disclosure may be a portion in which the rigidity of a portion of the upper surface 131 is made relatively much weaker than that of the adjacent portion, so that the corresponding portion may be ruptured when a force or heat exceeding a certain pressure is applied. According to this embodiment, when a high-temperature gas or flame is emitted from a battery cell 110 wrapped in a heat insulating case 130, the high-temperature gas or flame may be discharged through the venting part 130V.

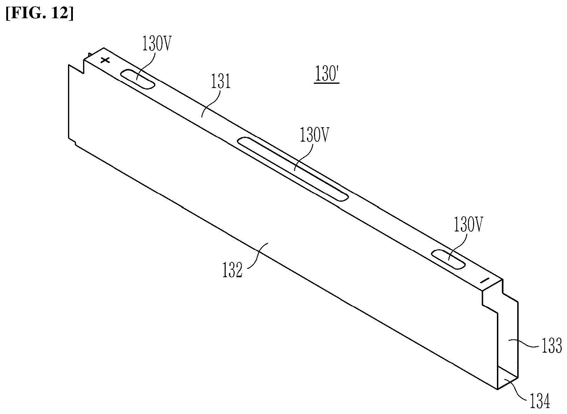

FIG. 12 is a perspective view showing a heat insulating case according to another embodiment of the present disclosure.

Referring to FIG. 12, a heat insulating case 130' according to another embodiment of the present disclosure may include an upper surface part 131, side surface parts 132 and 133, and a lower surface part 134. The upper surface part 131 may cover the upper part of the battery cell 110, the side surface parts 132 and 133 may cover each of both side surfaces of the battery cell 110, and the lower surface part 134 may cover the lower part of the battery cell 110. When the heat insulating case 130' is cut along one plane, the insulating case 130' may have a square shape. The heat insulating case 130' according to the present embodiment may be disposed to wrap at least a part of the remaining four surfaces of the six-sided battery cells 110, excluding the two surfaces where the electrode leads 111 are formed.

Meanwhile, the heat insulating case 130' may be formed with a venting part 130V. In particular, the venting part 130V may be formed in the upper surface part 131 of the heat insulating case 130', and the number or area thereof are not particularly limited. Specific descriptions of the venting part 130V overlap with the contents previously described, and therefore will be omitted.

Next, a battery pack according to an embodiment of the present disclosure will be described.

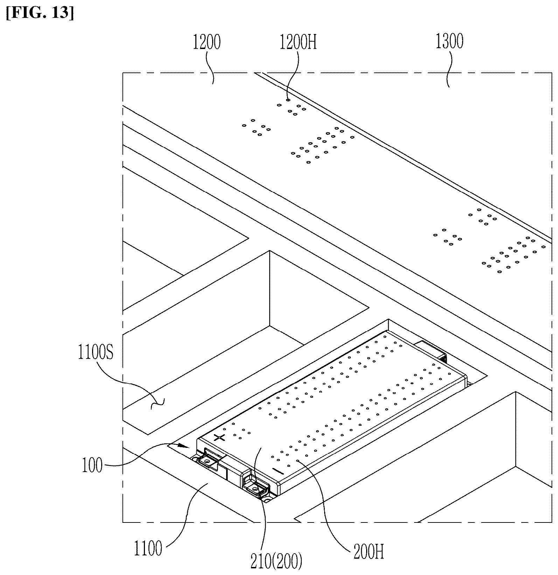

FIG. 13 is a partial perspective view showing a battery pack according to an embodiment of the present disclosure.

Referring to FIGS. 1, 2 and 13 together, a battery pack according to an embodiment of the present disclosure includes a battery module 100; a pack frame 1100 in which the battery module 100 is housed; and a pack cover 1200 that covers the battery module 100 housed in the pack frame 1100.

The pack frame 1100 may be a structure having an internal space 1100S and opened at its upper part, and a battery module 100 may be housed in the internal space 1100S of the pack frame 1100. One or more battery modules 100 may be housed in the pack frame 1100.

The pack cover 1200 is a structure that covers the open upper part of the pack frame 1100. A pack cover venting hole 1200H may be formed in a portion of the pack cover 1200 that corresponds to the venting hole 200H of the module frame 200. High-temperature gas or flame generated by a thermal runaway phenomenon of the battery module 100 may be discharged through the venting hole 200H of the module frame 200, and then discharged to the outside of the battery pack through the pack cover venting hole 1200H formed in the pack cover 1200.

Meanwhile, the battery pack according to the present embodiment may further include a venting film 1300 that covers the upper part of the pack cover 1200. The venting film 1300 is a member provided so that gas generated in the battery cells 110 interferes with vehicle operation but guides venting to a certain section, when the battery pack is mounted on a vehicle. As an example, the venting film 1300 may be a mesh-shaped member. However, the venting film 1300 is provided as needed, and if it is replaceable with another venting device, the battery pack may not be provided with such a venting film.

Meanwhile, referring again to FIG. 2 and FIG. 4, the battery module 100 according to the present embodiment may include a thermally conductive resin layer 700 located between the lower surface of the battery cell stack 120 and the bottom part 240 of the module frame 200. The thermally conductive resin layer 700 is formed by injecting a thermally conductive resin, and may include a thermally conductive adhesive material. Specifically, a thermally conductive resin having fluidity may be injected, and then the thermally conductive resin is solidified while being in contact with the battery cell stack 120. That is, it is possible to perform not only a role of transferring heat generated from the battery cell stack 120 to the bottom of the battery module 100 but also a role of fixing the battery cell stack 120 within the battery module 100.

In addition, the battery module 100 may include a compression pad 800 located on the outermost side of the battery cell stack 120. The compression pad 800 may also be disposed between the battery cells 110. The compression pad 800 may be disposed to absorb a swelling phenomenon in which the battery cells 110 swell up during charging and discharging.

In the embodiments above, expressions indicating directions such as "front," "rear," "left," "right," "up," and "down" have been used. However, these expressions are used only to facilitate the description, and may vary, for example, depending on the location of a target object or an observer.

One or more battery modules according to an embodiment of the present disclosure described above may be mounted together with various control and protection systems such as a battery management system (BMS), a battery disconnect unit (BDU), and a cooling system, to form a battery pack.

The battery modules or the battery pack may be applied to various devices, which include, for example, transportation vehicles such as electric bicycles, electric vehicles, and hybrids, and energy storage systems (ESS). However, without being limited thereto, the battery modules or the battery pack may be applied to various devices using secondary batteries.

While the embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

100: battery module
110: battery cell
120: battery cell stack
200: module frame
200H: venting hole
300: end plate
400a, 400b, 400c: phase change material layer
410: open part
420: block part
500: busbar frame

## Claims

1. A battery module comprising:
a battery cell stack in which a plurality of battery cells are stacked;
a module frame that houses the battery cell stack; and
a phase change material layer that is located between the battery cell stack and the module frame,
wherein the phase change material layer includes a phase change material and has a mesh structure, and
wherein the module frame is formed with venting holes.

2. The battery module according to claim 1,
wherein the phase change material layer is located between an upper surface of the battery cell stack and a ceiling part of the module frame.

3. The battery module according to claim 1,
wherein the phase change material layer includes an open part which is an opened area in the mesh structure, and a block part which is a blocked area in the mesh structure.

4. The battery module according to claim 3,
wherein at least one of the venting holes is located corresponding to the open part of the phase change material layer.

5. The battery module according to claim 1,
wherein the phase change material layer includes a paraffin material.

6. The battery module according to claim 1,
wherein the phase change material layer has a mesh structure having a hive shape, a square shape or a rhombus shape.

7. The battery module according to claim 1,
further comprising a busbar frame that covers the upper surface of the battery cell stack and one surface in the direction in which the electrode leads of the battery cell protrude,
wherein gas guide holes are formed in a portion of the busbar frame facing the module frame part in which the venting hole is formed.

8. The battery module according to claim 1,
wherein the battery cell includes an electrode assembly and a battery case that houses the electrode assembly, and
a heat insulating coating is formed on the surface of the battery case, or a heat insulating material is included in the battery case.

9. The battery module according to claim 1,
wherein a heat insulating case wraps around at least a part of the outer surface of the battery cell, and
the heat insulating case is formed with a venting part.

10. The battery module according to claim 9,
wherein the venting part is located corresponding to at least one of the venting holes of the module frame.

11. A battery pack comprising:
the battery module according to claim 1;
a pack frame in which the battery module is housed; and
a pack cover that covers the battery module housed in the pack frame,
wherein a pack cover venting hole is formed in a portion of the pack cover that corresponds to the venting hole.

12. The battery pack according to claim 11,
further comprising a venting film that covers the upper part of the pack cover.
